# EUROPEAN PATENT SPECIFICATION

(11) **EP 3 528 528 B1**
(45) Date of publication and mention of the grant of the patent: **06.11.2024**
(21) Application number: 17890622.8
(22) Date of filing: 02.09.2017
(51) Int. Cl.: H04W 24/00, H04B 7/00

(54) **METHOD AND DEVICE FOR TRANSMITTING MEASUREMENT SIGNAL**
VERFAHREN UND VORRICHTUNG ZUR ÜBERTRAGUNG EINES MESSSIGNALS
PROCÉDÉ ET DISPOSITIF DE TRANSMISSION DE SIGNAL DE MESURE

(30) Priority: 03.01.2017 CN 201710002460
(43) Date of publication of application: 21.08.2019
(73) Proprietor: Huawei Technologies Co., Ltd., Longgang District Shenzhen, Guangdong 518129 (CN)
(72) Inventor: LUO, Jun, Shenzhen Guangdong 518129 (CN); LIU, Jin, Shenzhen Guangdong 518129 (CN); YUAN, Pu, Shenzhen Guangdong 518129 (CN)
(74) Representative: Pfenning, Meinig & Partner mbB
(86) International application number: PCT/CN2017/100293
(87) International publication number: WO 2018/126722

(56) References cited:
- WO-A1-2016/003336
- WO-A1-2016/111524
- CN-A- 104 349 446
- CN-A- 105 207 705
- CN-A- 105 828 438
- MEDIATEK INC: "Uplink Assistance for NR Mobility in NR", vol. RAN WG2, no. Reno, USA; 20161114 - 20161118, 13 November 2016 (2016-11-13), XP051177714, Retrieved from the Internet <URL:http://www.3gpp.org/ftp/Meetings_3GPP_SYNC/RAN2/Docs/> [retrieved on 20161113]
- ERICSSON: "Beam management principles", vol. RAN WG1, no. Lisbon, Portugal; 20161010 - 20161014, 9 October 2016 (2016-10-09), XP051149786, Retrieved from the Internet <URL:http://www.3gpp.org/ftp/Meetings_3GPP_SYNC/RAN1/Docs/> [retrieved on 20161009]

## Description

### TECHNICAL FIELD

The present invention relates to a method for sending a measurement signal, a method for receiving a measurement signal, a network device, a system, and a computer-readable storage medium.

### BACKGROUND

Radio resource management in an existing wireless communications system usually uses a downlink measurement signal-based measurement manner. To be specific, a base station sends a downlink measurement signal such as a reference signal RS (Reference Signal), and a terminal device measures a parameter such as RSRP (Reference Signal Received Power, reference signal received power)/RSRQ (Reference Signal Received Quality, reference signal received quality) of the reference signal sent by the base station, and reports a detection result to the base station. The base station determines handover and movement of the terminal device based on the detection result.

To reduce dependence of radio resource management on fixed and frequent sending of a downlink measurement signal by a network, and to improve system efficiency, introduction of an uplink measurement signal-based measurement method is considered. To be specific, a terminal device sends an uplink measurement signal; and a network device, such as a base station or a TRP (transmission reception point, transmission reception point), associated with the terminal device and a neighboring base station or TRP measure the uplink signal sent by the terminal device, and compare detection results of the base stations or the TRPs, so as to determine to hand over the terminal device to a proper cell for service.

To satisfy large-capacity and high-rate transmission requirements of a mobile communications system, a high-frequency band higher than 6 GHz is introduced for communication, to utilize high-bandwidth and high-rate transmission features of the high-frequency band. However, due to a high path loss of high-frequency communications, a narrow beam needs to be used to ensure a propagation distance and a high beam gain.
Therefore, a directional narrow beam is also used for transmission of the uplink measurement signal or the downlink measurement signal. A relatively large quantity of measurement overheads are generated due to a relatively large quantity of beams in the high-frequency communications.

Document MEDIATEK INC, "Uplink Assistance for NR Mobility in NR", vol. RAN WG2, no. Reno, USA; 20161114 - 20161118, (20161113), 3GPP DRAFT; R2-168002 UL ASSISTANCE FOR NR MOBILITY IN ACTIVE STATE, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FR, URL: http://www.3gpp.org/ftp/Meetings_3GPP_SYNC/RAN2/Docs/, (20161113), XP051177714 describes concepts for using uplink measurements to assist downlink-based mobility decisions.

WO 2016/003336 A1 describes a method for enabling accurate measurement results for a communication device. The method comprises sending, by a serving node serving the communication device and to a neighbour network node, a request for measuring on the uplink reference signals from the communication device; the serving and neighbour nodes receiving, from the communication device, uplink reference signals; the serving and the neighbour nodes obtaining downlink beamforming weights based on the received uplink reference signals; the serving and the neighbour nodes transmitting, to the communication device, specific downlink reference signals adapted for the communication device by using the downlink beamforming weights; the UE transmitting a downlink measurement report to the serving node; the serving node taking a mobility decision based on the UE report.

Document ERICSSON, "Beam management principles", vol. RAN WG1, no. Lisbon, Portugal; 20161010 - 20161014, (20161009), 3GPP DRAFT; R1-1609754 BEAM MANAGEMENT PRINCIPLES, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL: http://www.3gpp.org/ftp/Meetings_3GPP_SYNC/RAN1/Docs/, (20161009), XP051149786 describes concepts for finding and dynamically maintaining a best beam pair.

WO 2016/209128 A1 discloses a method performed by a network node for managing a geo-fence for use by a source radio network node, wherein the method comprises: receiving indications about signal quality at respective positions of user equipments, wherein the user equipments have been subject to hand-overs from the source radio network node at the
respective positions, wherein the hand-overs are based on signal quality measured for the user equipments; defining the geo-fence based on the respective positions and the indications about signal quality, wherein the geo-fence defines a geographical area; and supporting a hand-over of a user equipment from the source radio network node to a target radio network node while using the geo- fence, wherein the hand-over is performed without measurements, by the user equipment, of signal quality towards the target radio network node for the user equipment.

### SUMMARY

The above problems are solved by the subject-matter according to the independent claims. The present invention provides a a method for sending a measurement signal, a method for receiving a measurement signal, a network device, a system, and a computer-readable storage medium according to the independent claims to reduce system overheads.

According to a first aspect, a method for sending a measurement signal is provided. The method comprises: sending, by a network device, downlink measurement signals to a terminal device by using one or more transmit beams; and receiving, by the network device, a detection result, fed back by the terminal device, of signal strength of the downlink measurement signals. The method further comprises: when determining, by the network device, that the terminal device enters a cell edge area of the network device by detecting that the detection result is lower than a specified threshold and determining, by the network device, that a quantity of terminal devices that enter the cell edge area is less than a quantity of neighboring base stations, instructing, by the network device, the terminal device to use an uplink measurement signal-based measurement manner.

According to a second aspect, a method for receiving a measurement signal is provided. The method comprises: receiving, by a terminal device, downlink measurement signals that are sent by a network device by using one or more beams; and detecting, by the terminal device, signal strength of the downlink measurement signals and feeding back a detection result to the network device. The method further comprises: when the network device determines that the terminal device enters a cell edge area of the network device by detecting that the detection result, fed back by the terminal device, of the downlink measurement signals is lower than a specified threshold and the network device determines that a quantity of terminal devices that enter the cell edge area is less than a quantity of neighboring base stations, receiving, by the terminal device, a notification that is sent by the network device and that indicates to use an uplink measurement signal-based measurement manner.

With reference to the foregoing aspects, an uplink measurement signal is an uplink reference signal or an uplink tracking signal.

With reference to the foregoing aspects, a downlink measurement signal is a downlink reference signal, a channel state information-reference signal, or a measurement reference signal.

With reference to the foregoing aspects, a measurement parameter of the uplink measurement signal or the downlink measurement signal is RSRP or RSRQ, or another measurement parameter such as a CQI (Channel Quality Indicator, channel quality indicator), an RI (Rank Indicator, rank indicator), or a PMI (Precoding Matrix indicator, precoding matrix indicator).

With reference to the foregoing aspects, a network device is a base station or a TRP, or another type of network device.

According to a third aspect, a network device is further provided, including a sending module, a receiving module, and a detection module. The sending module, the receiving module, and the detection module are configured to implement the method according to the first aspect.

With reference to the foregoing aspects, the receiving module is further configured to receive uplink measurement signals that are sent by the terminal device by using one or more beams.

According to a fourth aspect, which is not an embodiment of the present invention but helpful for understanding certain aspects thereof, a terminal device is provided, including:
a receiving module, configured to receive downlink measurement signals that are sent by a network device by using one or more beams; and
a detection module, configured to: detect signal strength of the downlink measurement signals and feed back a detection result to the network device, where
when the network device detects that the detection result, fed back by the terminal device, of the downlink measurement signals is lower than a specified threshold, the receiving module is further configured to receive a notification that is sent by the network device and that indicates to use an uplink measurement signal-based measurement manner.

With reference to the foregoing aspects, the terminal device further includes a sending module, configured to send uplink measurement signals to the network device by using one or more beams.

The foregoing apparatuses respectively correspond to corresponding network devices or terminal devices in the methods, and use corresponding modules to separately perform corresponding steps in the methods. Details are not described herein.

In an apparatus embodiment of another form, the receiving module may be implemented by a receiver; the sending module may be implemented by a transmitter; and the detection module and the detection module may be implemented by a processor. Functions corresponding to steps, except transmitting/receiving, in another method procedure may be implemented by a processor.

In the solutions of the foregoing aspects of the present invention, a corresponding measurement signal is sent based on a determined optimal transmit beam, thereby reducing measurement overheads. In addition, switching between measurement manners is performed based on a detection result, thereby reducing signaling overheads.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may derive other drawings from these accompanying drawings without creative efforts.
FIG. 1 is a flowchart of a method for sending a measurement signal according to an example, which is not an embodiment of the present invention but helpful for understanding certain aspects thereof;
FIG. 2 is a flowchart of a method for sending a measurement signal according to another example, which is not an embodiment of the present invention but helpful for understanding certain aspects thereof;
FIG. 3 is a flowchart of a method for sending a measurement signal according to an embodiment of the present invention;
FIG. 4 is a schematic diagram of a reference signal burst according to an example;
FIG. 5 is a schematic diagram of an apparatus for sending a measurement signal according to an example, which is not an embodiment of the present invention but helpful for understanding certain aspects thereof;
FIG. 6 is a schematic diagram of an apparatus for sending a measurement signal according to another embodiment of the present invention; and
FIG. 7 is a schematic diagram of an apparatus for sending a measurement signal according to still another embodiment of the present invention.

### DESCRIPTION OF EMBODIMENTS

Embodiments of the present invention may be used in wireless networks using various technologies. In different systems, a radio access network device may include different network elements. For example, in LTE (Long Term Evolution), LTE-A (LTE Advanced), and 5G NR (New Radio), network elements of a radio access network include an eNB (eNodeB, evolved NodeB), a TRP (transmission reception point), and the like. Network elements of a WLAN (wireless local area network)/Wi-Fi include an access point (Access Point, AP) and the like. In another wireless network, a solution similar to the embodiments of the present invention may also be used. However, related modules in a base station system may be different from those in the present invention. This is not limited in the embodiments of the present invention.

It should be further understood that in the embodiments of the present invention, a terminal device includes but is not limited to user equipment (UE, User Equipment), a mobile station (MS, Mobile Station), a mobile terminal (Mobile Terminal), a mobile phone (Mobile Telephone), a handset (handset), portable equipment (portable equipment), and the like. The user equipment may communicate with one or more core networks by using a radio access network (RAN, Radio Access Network). For example, the user equipment may be a mobile phone (or referred to as a "cellular" telephone), or a computer having a wireless communication function; alternatively, the user equipment may be a portable, pocket-sized, handheld, computer built-in, or in-vehicle mobile apparatus.

During high-frequency communications, a narrow beam needs to be used to ensure a propagation distance and a high beam gain, and beam alignment is performed to ensure communication quality. Therefore, during communication between a network device and different terminal devices, the communication is implemented on different beam pairs. The network device sends a measurement signal by using a transmit beam (TX beam), and the terminal device receives the measurement signal by using a corresponding receive beam (RX beam). Similarly, the terminal device sends a measurement signal by using a transmit beam (TX beam), and the network device receives the measurement signal by using a corresponding receive beam (TX beam).

In a next-generation wireless communications system, namely, a 5G communications system, which is also referred to as an NR (New Radio) system, to reduce dependence of radio resource management on fixed and frequent sending of a downlink reference signal by a network, and to improve system efficiency, introduction of an uplink measurement signal-based measurement method is considered. To be specific, a terminal device sends an uplink measurement signal; and a base station or a transmission reception point TRP (transmission reception point) associated with the terminal device and a neighboring base station or TRP measure the uplink signal sent by the terminal device, and compare detection results of the base stations or the TRPs, so as to determine to hand over the terminal device to a proper cell for service. In a 5G system, a base station may include one or more TRPs, and a cell may be a coverage area formed by one or more TRPs. The uplink signal is used for measurement, so that the network can track the terminal device, and the network can not only track a current location of the terminal device, but also know which TRP or base station can currently provide optimal transmission.

To improve network efficiency, and provide better flexibility for radio resource management, an embodiment of the present invention provides an uplink-downlink measurement signal hybrid sending manner in a scenario of a high-frequency communications system, to improve measurement accuracy and reduce measurement signal overheads.

Embodiment 1 provides a method for sending a downlink measurement signal in a high-frequency system, where the sending is assisted by a network device and a terminal device by using an uplink signal. Embodiment 1 is not an embodiment of the present invention but helpful for understanding certain aspects thereof. The terminal device sends uplink measurement signals on a plurality of uplink transmit beams, where the uplink measurement signal may be, for example, an uplink SRS (sounding reference signal, sounding reference signal), an uplink tracking signal (Tracking signal), or another measurement signal. The network device determines a beam direction of an optimal transmit beam based on signal strength of the received uplink measurement signals, and sends a downlink measurement signal by using a corresponding downlink beam based on the beam direction.

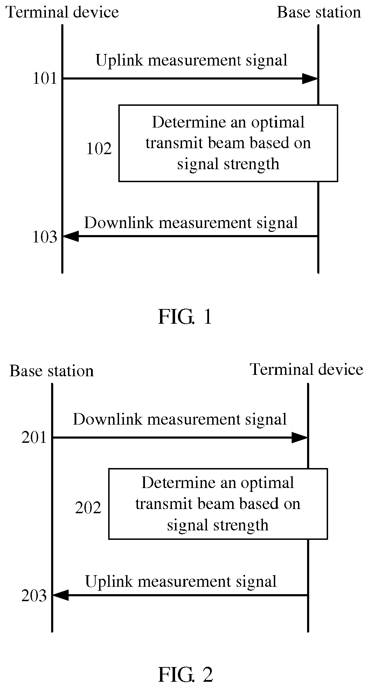

The following is described by using an example in which the network device is a base station. Referring to FIG. 1, the method for sending a downlink measurement signal includes the following steps.

101. The terminal device separately sends uplink measurement signals by a plurality of transmit beams.

The terminal device may separately send the uplink measurement signals on different uplink transmit beams in a manner of beam sweeping. The uplink measurement signal may be, for example, an SRS, a tracking signal, or another measurement signal. The base station may receive uplink measurement signals of one or more beams, which are usually uplink measurement signals of a plurality of beams.

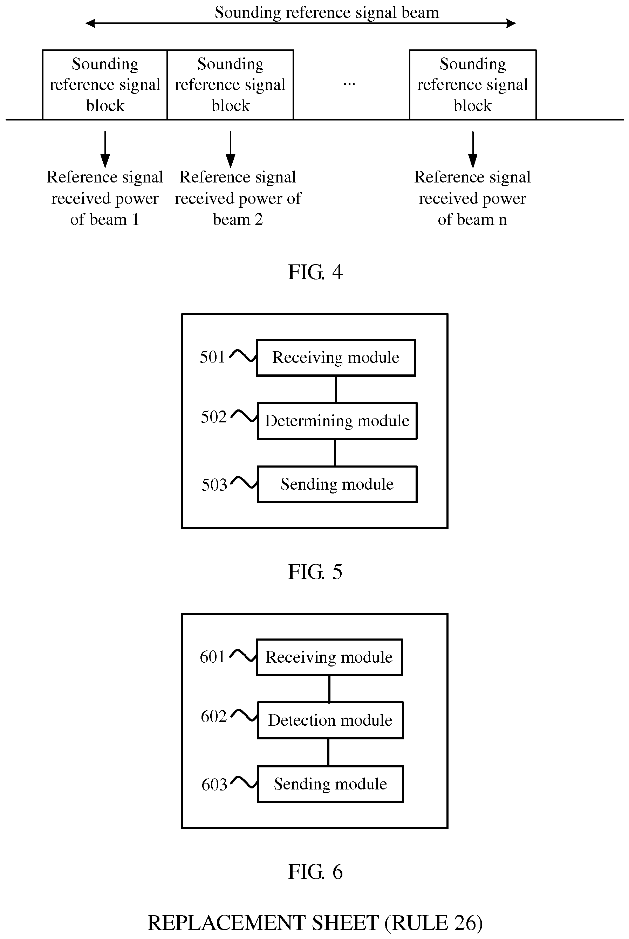

Referring to FIG. 4, the terminal device may send uplink measurement signals for a plurality of uplink transmit beams (TX beam) in one UL SRS burst, where one UL SRS burst includes a plurality of UL SRS blocks. Each UL SRS block is used to send an uplink measurement signal on one transmit beam, and each UL SRS block occupies one or more symbols. All transmit beams of the terminal device or some of the transmit beams may be polled in one UL SRS burst.

102. The base station receives the uplink measurement signals that are sent by the plurality of transmit beams, detects signal strength of the uplink measurement signals of the beams, and determines a beam direction of an optimal transmit beam.

For example, the base station receives SRS of a plurality of SRS blocks and detects signal strength information of each SRS. The signal strength information may be based on an RSRP/RSRQ value or based on a CQI value, or may use a detection value of another type, such as an RI or a PMI. Because each SRS block corresponds to one transmit beam, a TRP may determine a beam direction of a transmit beam with highest signal strength based on signal strength information of an SRS corresponding to each received SRS block. The transmit beam with the highest signal strength is the optimal transmit beam.

In addition, alternatively, a threshold may be set, and a beam whose signal strength is higher than the threshold is used as the optimal transmit beam. In this case, there may be one or more optimal transmit beams.

Because the base station uses a corresponding receive beam to receive an uplink measurement signal that is sent by the terminal device, an optimal transmit beam of the terminal corresponds to an optimal receive beam of the base station.

103. The base station sends a downlink measurement signal to the terminal device by using a corresponding downlink beam based on the beam direction of the optimal transmit beam.

For the terminal device, the base station sends the downlink measurement signal by using the corresponding downlink transmit beam based on the beam direction of the optimal transmit beam. The downlink measurement signal may be a CSI-RS (channel state information-reference signal, channel state information-reference signal) or an SS (Synchronization Signal, synchronization signal) for the terminal device; or a reference signal RS or an MRS (measurement reference signal, measurement reference signal) for the beams; or a reference signal of another type. This is not limited in this embodiment of the present invention.

Subsequently, the terminal device may detect the reference signal sent by the base station and report a detection result to the base station, so that the base station may perform corresponding processing based on the detection result of the terminal device. This procedure is available in the prior art. Details are not described herein.

Embodiment 2 provides a method for sending an uplink measurement signal in a high-frequency system, where the sending is assisted by a network device and a terminal device by using a downlink signal. Embodiment 2 is not an embodiment of the present invention but helpful for understanding certain aspects thereof. A base station sends downlink measurement signals on a plurality of downlink transmit beams, where the downlink measurement signal may be a downlink MRS or another measurement signal. The terminal device determines a beam direction of an optimal transmit beam based on signal strength of the received downlink measurement signals, and sends an uplink measurement signal by using a corresponding uplink transmit beam based on the beam direction.

Referring to FIG. 2, the method for sending an uplink measurement signal includes the following steps.

201. The base station sends downlink measurement signals by a plurality of transmit beams.

The base station may send the downlink measurement signals on the plurality of downlink transmit beams in a manner of beam sweeping. If there are a plurality of base stations, the downlink measurement signals may be sent separately in the manner of beam sweeping. The downlink measurement signal may be a measurement reference signal MRS, or a measurement signal of another type mentioned in the foregoing embodiment.

202. The terminal device receives the downlink measurement signals, detects signal strength information of the downlink measurement signals, and determines a beam direction of an optimal transmit beam.

For example, the terminal device detects signal strength of the downlink measurement signals and determines a transmit beam with highest signal strength as the optimal transmit beam, for example, the terminal device may measure RSRP or RSRQ of each beam to determine the optimal transmit beam. Further, the terminal device may feed back an optimal downlink transmit beam to the base station.

In addition, alternatively, a threshold may be set, and a beam whose signal strength is higher than the threshold is used as the optimal transmit beam. In this case, there may be one or more optimal transmit beams.

203. The terminal device sends an uplink measurement signal to the base station by using a corresponding uplink transmit beam based on the beam direction of the optimal transmit beam.

The terminal device sends, in the direction of the optimal transmit beam, the uplink measurement signal to the base station by using the corresponding uplink beam. The uplink measurement signal may be an uplink tracking signal or an uplink reference signal. The uplink measurement signal may be sent in a manner of beam sweeping (beam sweeping).

Subsequently, the base station may measure the uplink measurement signal sent by the terminal device and perform corresponding processing based on a detection result. This procedure is available in the prior art. Details are not described herein.

In addition to the foregoing method for determining an optimal transmit beam, in another implementation, a manner of determining an optimal port may also be used. After receiving the downlink measurement signals sent by the base station, the terminal device may also measure each port corresponding to the downlink measurement signal. Based on an obtained measurement indicator (which may be, for example RSRP or RSRQ) of the port, the terminal device determines the optimal port, for example, a port with highest signal strength, and then sends an uplink measurement signal by using a corresponding transmit beam based on one or more beam directions corresponding to the optimal port. The port is a time-frequency resource location of a corresponding measurement signal. One port may correspond to one or more transmit beams. The base station may notify the terminal device in advance of a number of a port that needs to be measured.

In addition, alternatively, a threshold may be set, and a port whose measurement indicator is higher than the threshold is used as the optimal port. The base station may notify the terminal device in advance of the threshold.

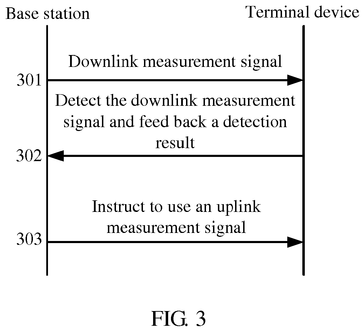

Embodiment 3 provides a method for sending a wireless measurement signal by a terminal device and a base station in an uplink-downlink hybrid manner in a high-frequency system. Referring to FIG. 3, the method includes the following steps.

301. The base station sends downlink measurement signals to the terminal device by a plurality of transmit beams.

The base station may send the downlink measurement signals on downlink beams in different directions in a manner of beam sweeping, so that terminals at different locations may receive the downlink measurement signals. A terminal device may receive reference signals in one or more beam directions, which are usually reference signals of a plurality of beams. For a type of a downlink measurement signal, refer to the downlink measurement signal mentioned in the foregoing embodiments. Details are not described herein again.

302. The terminal device detects signal strength of the downlink measurement signals by the plurality of transmit beams and feeds back a detection result to the base station.

The terminal device receives the downlink measurement signals of the plurality of beams; detects the signal strength of the downlink measurement signals of the beams, for example, measures RSRP values of the downlink measurement signals of the beams or may measure another measurement parameter such as RSRQ, which is not limited in this embodiment; and feeds back the detection result to the base station.

The detection result may be an average value or a largest value of the signal strength of the downlink measurement signals of the plurality of beams. For example, a measured largest value or an average value of RSRP of the plurality of beams may be fed back.

In another embodiment, the RSRP values of the beams may be all fed back to the base station, and the base station calculates the average value of the RSRP.

If the terminal device receives only a downlink measurement signal of one beam, only an RSRP value of the beam is fed back.

303. The base station determines that the terminal device enters a cell edge area based on the detection result, and instructs the terminal device to use an uplink signal-based measurement manner.

When the base station detects that the signal strength, fed back by the terminal device, of the downlink measurement signals is lower than a specified threshold, the base station instructs the terminal device to use the uplink signal-based measurement manner.

The base station detects that an RSRP measurement value of the terminal device is lower than the specified threshold. It indicates that the terminal device enters the cell edge area. When the base station detects that RSRP measurement values of a plurality of terminal devices are lower than a specified threshold, it indicates that the plurality of terminal devices enter the cell edge area. To be specific, the base station detects that the terminal device moves to the cell edge area. In other words, when the base station determines, based on the detection result fed back by the terminal device, that the terminal device enters the cell edge area, a downlink signal-based measurement manner causes relatively high signaling overheads. The base station instructs the terminal device or the plurality of terminal devices to use an uplink signal-based measurement manner.

In addition to that the base station detects that the terminal device moves to the cell edge area, when detecting that a quantity of terminal devices that enter the cell edge area is less than a specified threshold, the base station instructs the terminal device to use the uplink signal-based measurement manner. The threshold is a quantity of neighboring base stations. To be specific, when detecting that the terminal device moves to the cell edge area and that the quantity of terminal devices that enter the cell edge area is less than the quantity of neighboring base stations, the base station instructs the terminal device to use the uplink signal-based measurement manner. There may be one or more terminal devices. In addition, another type of threshold may be specified.

In another implementation, after the terminal device receives the downlink measurement signals sent by the base station, the terminal device detects the downlink measurement signals. When the terminal device detects that a detection result of the downlink measurement signals is less than a specified threshold, the terminal device sends an uplink measurement signal to the base station. In other words, the terminal device actively switches to the uplink signal-based measurement manner, and the base station does not need to instruct the terminal device to switch.

In still another implementation, the terminal device receives the downlink measurement signals sent by the base station and detects the downlink measurement signals. When detecting that a detection result of the downlink measurement signals is less than a specified threshold, the terminal device reports the detection result to the network device. The base station determines, based on the detection result, that the uplink measurement signal-based measurement manner is to be used and instructs the terminal device to use the uplink measurement signal-based measurement manner. In this implementation, the base station controls whether the uplink measurement signal-based measurement manneris to be used, and reports only a detection result that is lower than the threshold, thereby reducing network overheads and avoiding frequent switching between measurement manners by the terminal device. In addition, the terminal device may further notify the base station that the uplink measurement signal-based measurement manner is to be used.

In addition to the foregoing manner of detecting signal strength of the plurality of beams in this embodiment, a manner of detecting a port may be used in another implementation. After the terminal device receives the downlink measurement signals sent by the network device, the terminal device may detect ports corresponding to the downlink measurement signals. When measurement indicators of the ports are less than a specified threshold, the terminal device sends an uplink measurement signal to the network device, or reports a detection result to the network device, and the network device determines, based on the detection result, that the uplink measurement signal-based measurement manner is to be used and notifies the terminal device.

Subsequently, the terminal device or the plurality of terminal devices may send uplink measurement signals to a corresponding base station by using one or more transmit beams. The uplink measurement signal may be an SRS or an uplink tracking signal, or another type of measurement signal. For procedures, for example, about determining, by the base station, cell handover based on the uplink measurement signal fed back by the terminal device. Details are not described herein again.

In the cell edge area, because downlink mobility measurement causes relatively high signaling overheads, uplink measurement signal-based measurement manner may further implement fast access of the terminal device, reduce a transmitting range of a downlink paging message and paging signaling overheads, and improve network performance.

In the foregoing implementations of the present invention, for a manner of detecting the downlink measurement signals by the terminal device, measurement may be performed for each transmit beam or for each port. A measurement indicator may use RSRP or RSRQ, or another measurement indicator. This is not limited in this embodiment of the present invention.

Based on the base station in Embodiment 1, a network device is further provided. Referring to FIG. 5, the network device includes:
a receiving module 501, configured to receive uplink measurement signals that are sent by a terminal device by a plurality of transmit beams;
a detection module 502, configured to determine a beam direction of an optimal transmit beam based on signal strength information of the uplink measurement signals of the plurality of beams; and
a sending module 503, configured to send a downlink measurement signal to the terminal device by using a corresponding downlink transmit beam based on the beam direction of the optimal transmit beam.

Based on the terminal device in Embodiment 2, a terminal device is provided. Referring to FIG. 5, the terminal device includes:
a receiving module 501, configured to receive downlink measurement signals that are sent by a network device by a plurality of transmit beams;
a detection module 502, configured to determine a beam direction of an optimal transmit beam based on signal strength information of the downlink measurement signals of the plurality of transmit beams; and
a sending module 503, configured to send an uplink measurement signal to the network device by using a corresponding uplink transmit beam based on the beam direction of the optimal transmit beam, where
the optimal transmit beam is a transmit beam with highest signal strength or a transmit beam whose signal strength is higher than a specified threshold.

Based on the base station in Embodiment 3, a network device is further provided. Referring to FIG. 6, the network device includes a sending module 603, a receiving module 601, and a detection module 602.

The sending module is configured to send downlink measurement signals to a terminal device by using one or more transmit beams.

The receiving module is configured to receive a detection result, fed back by the terminal device, of signal strength of the downlink measurement signals of the one or more transmit beams.

When the detection module detects that the detection result, fed back by the terminal device, of the downlink measurement signals is lower than a specified threshold, the sending module is further configured to instruct the terminal device to use an uplink measurement signal-based measurement manner.

With reference to the foregoing aspects, the receiving module is further configured to receive uplink measurement signals that are sent by the terminal device by using one or more beams.

Based on the terminal device in Embodiment 3, a terminal device is provided. Referring to FIG. 6, the terminal device includes:
a receiving module 601, configured to receive downlink measurement signals that are sent by a network device by using one or more beams; and
a detection module 602, configured to: detect signal strength of the downlink measurement signals and feed back a detection result to the network device.

When the network device detects that the detection result, fed back by the terminal device, of the downlink measurement signals is lower than a specified threshold, the receiving module is further configured to receive a notification that is sent by the network device and that indicates to use an uplink measurement signal-based measurement manner.

With reference to the foregoing aspects, the terminal device further includes a sending module 603, configured to send uplink measurement signals to the network device by using one or more beams.

In the foregoing apparatus embodiments, the network device and the terminal device respectively correspond to the base station and the terminal device in the corresponding method embodiments, and a corresponding module performs a corresponding step. For other steps, refer to a corresponding method embodiment and a corresponding module is used for performing the other steps. Details are not described herein.

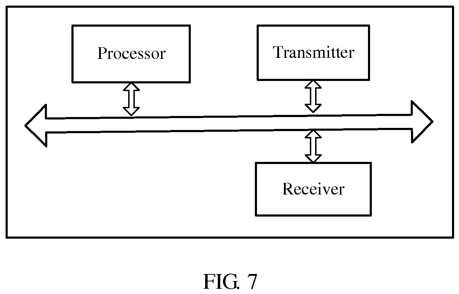

In an apparatus embodiment of another form, referring to FIG. 7, in the foregoing embodiments, the receiving module may be implemented by a receiver; the sending module may be implemented by a transmitter; and other modules such as the detection module and the detection module may be implemented by a processor. Functions corresponding to steps in another method procedure may be implemented by a processor.

In the foregoing apparatus embodiments, a corresponding function module performs a corresponding step in the method embodiments. For detailed steps, refer to a corresponding method. Details are not described herein.

In the foregoing embodiments, the network device may be a base station, or another network device such as a transmission reception point TRP. This is not limited in the embodiments of the present invention.

Optionally, components of the device in FIG. 7 are coupled together by using a bus system, and the bus system includes a power bus, a control bus, and a status signal bus in addition to a data bus.

It should be understood that in the embodiments of the present invention, the processor may be a central processing unit (Central Processing Unit, "CPU" for short), or another general purpose processor, a digital signal processor (DSP), an application-specific integrated circuit (ASIC), a field-programmable gate array (FPGA), or another programmable logic device, discrete gate or transistor logic device, discrete hardware component, or the like. The general purpose processor may be a microprocessor, or any conventional processor or the like.

The memory may include a read-only memory and a random access memory, and provide an instruction and data for the processor. Apart of the memory may further include a non-volatile random access memory. For example, the memory may further store information about a device type.

The bus system may further include a power bus, a control bus, a status signal bus, and the like, in addition to a data bus. However, for clear description, various types of buses in the figure are marked as the bus system.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

It should be understood that sequence numbers of the foregoing processes do not mean execution sequences in the embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of the present invention may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A method for sending a measurement signal, comprising:
sending (301), by a network device, downlink measurement signals to a terminal device by using one or more transmit beams; and
receiving, by the network device, a detection result, fed back by the terminal device, of signal strength of the downlink measurement signals;
**characterized in that** the method further comprises:
when determining, by the network device, that the terminal device enters a cell edge area of the network device by detecting that the detection result is lower than a specified threshold and determining, by the network device, that a quantity of terminal devices that enter the cell edge area is less than a quantity of neighboring base stations, instructing (303), by the network device, the terminal device to use an uplink measurement signal-based measurement manner.

2. The method according to claim 1, wherein the detection result of the signal strength of the downlink measurement signals is an average value or a largest value of signal strength of downlink measurement signals of a plurality of transmit beams.

3. The method according to claim 1, further comprising: receiving uplink measurement signals that are sent by the terminal device by using one or more beams.

4. A method for receiving a measurement signal, comprising:
receiving, by a terminal device, downlink measurement signals that are sent by a network device by using one or more beams; and
detecting (302), by the terminal device, signal strength of the downlink measurement signals and feeding back a detection result to the network device;
**characterized in that** the method further comprises:
when the network device determines that the terminal device enters a cell edge area of the network device by detecting that the detection result, fed back by the terminal device, of the downlink measurement signals is lower than a specified threshold and the network device determines that a quantity of terminal devices that enter the cell edge area is less than a quantity of neighboring base stations, receiving, by the terminal device, a notification that is sent by the network device and that indicates to use an uplink measurement signal-based measurement manner.

5. The method according to claim 4, wherein the detection result of the signal strength of the downlink measurement signals is an average value or a largest value of signal strength of downlink measurement signals of a plurality of transmit beams.

6. The method according to claim 4, further comprising: sending, by the terminal device, uplink measurement signals to the network device by using one or more beams.

7. The method according to any one of claims 4 to 6, wherein the detecting, by the terminal device, signal strength of the downlink measurement signals, and feeding back a detection result to the network device specifically comprises:
measuring, by the terminal device, ports corresponding to the downlink measurement signals to obtain measurement indicators of the ports, and sending the measurement indicators of the ports to the network device; or
measuring, by the terminal device, the beams corresponding to the downlink measurement signals to obtain measurement indicators of the beams, and sending the measurement indicators of the beams to the network device.

8. The method according to any one of claims 1 to 7, wherein the uplink measurement signal is an uplink reference signal or an uplink tracking signal.

9. The method according to any one of claims 1 to 8, wherein the downlink measurement signals are downlink reference signals, channel state information-reference signals or measurement reference signals.

10. A network device, comprising one or more modules configured to implement any one of claims 1, 2, 3, 8 or 9.

11. A system comprising the network device of claim 10 and a terminal device, wherein the terminal device comprises one or more modules configured to implement the method of any one of claims 4 to 9.

12. A computer-readable storage medium comprising instructions which, when executed by a computer, cause the computer to carry out the method according to any one of claims 1 to 3 or the method according to claim 8 or 9 as dependent on any one of claims 1 to 3.

## Patentansprüche

1. Verfahren zum Senden eines Messsignals, umfassend:
Senden (301) von Downlink-Messsignalen durch eine Netzwerkvorrichtung an eine Endgerätvorrichtung unter Verwendung eines oder mehrerer Übertragungsstrahlen; und
Empfangen eines Erkennungsergebnisses, das durch die Endgerätvorrichtung rückgemeldet wird, der Signalstärke der Downlink-Messsignale durch die Netzwerkvorrichtung;
**dadurch gekennzeichnet, dass** das Verfahren ferner Folgendes umfasst:
wenn durch die Netzwerkvorrichtung bestimmt wird, dass die Endgerätvorrichtung in einen Zellenrandbereich der Netzwerkvorrichtung eintritt, indem erkannt wird, dass das Erkennungsergebnis niedriger als ein spezifizierter Schwellenwert ist, und wenn durch die Netzwerkvorrichtung bestimmt wird, dass eine Anzahl an Endgerätvorrichtungen, die in den Zellenrandbereich eintreten, geringer ist als eine Anzahl an benachbarten Basisstationen, Anweisen (303) der Endgerätvorrichtung durch die Netzwerkvorrichtung, eine auf dem Uplink-Messsignal basierende Messweise zu verwenden.

2. Verfahren gemäß Anspruch 1, wobei das Erkennungsergebnis der Signalstärke der Downlink-Messsignale ein Durchschnittswert oder ein größter Wert der Signalstärke von Downlink-Messsignalen einer Vielzahl von Übertragungsstrahlen ist.

3. Verfahren gemäß Anspruch 1, ferner umfassend: Empfangen von Uplink-Messsignalen, die durch die Endgerätvorrichtung unter Verwendung eines oder mehrerer Strahlen gesendet werden.

4. Verfahren zum Empfangen eines Messsignals, umfassend:
Empfangen von Downlink-Messsignalen durch eine Endgerätvorrichtung, die durch eine Netzwerkvorrichtung unter Verwendung eines oder mehrerer Strahlen gesendet werden; und
Erkennen (302) der Signalstärke der Downlink-Messsignale und Rückmelden eines Erkennungsergebnisses an die Netzwerkvorrichtung durch die Endgerätvorrichtung;
**dadurch gekennzeichnet, dass** das Verfahren ferner Folgendes umfasst:
wenn die Netzwerkvorrichtung bestimmt, dass die Endgerätvorrichtung in einen Zellenrandbereich der Netzwerkvorrichtung eintritt, indem erkannt wird, dass das durch die Endgerätvorrichtung rückgemeldete Erkennungsergebnis der Downlink-Messsignale niedriger ist als ein spezifizierter Schwellenwert, und die Netzwerkvorrichtung bestimmt, dass eine Anzahl an Endgerätvorrichtungen, die in den Zellenrandbereich eintreten, geringer ist als eine Anzahl an benachbarten Basisstationen, Empfangen einer Benachrichtigung durch die Endgerätvorrichtung, die durch die Netzwerkvorrichtung gesendet wird und die anzeigt, eine auf dem Uplink-Messsignal basierende Messweise zu verwenden.

5. Verfahren gemäß Anspruch 4, wobei das Erkennungsergebnis der Signalstärke der Downlink-Messsignale ein Durchschnittswert oder ein größter Wert der Signalstärke von Downlink-Messsignalen einer Vielzahl von Übertragungsstrahlen ist.

6. Verfahren gemäß Anspruch 4, ferner umfassend: Senden von Uplink-Messsignalen durch die Endgerätvorrichtung an die Netzwerkvorrichtung unter Verwendung eines oder mehrerer Strahlen.

7. Verfahren gemäß einem der Ansprüche 4 bis 6, wobei das Erkennen der Signalstärke der Downlink-Messsignale durch die Endgerätvorrichtung und das Rückmelden eines Erkennungsergebnisses an die Netzwerkvorrichtung spezifisch Folgendes umfasst:
Messen von den Downlink-Messsignalen entsprechenden Anschlüssen durch die Endgerätvorrichtung, um Messindikatoren der Anschlüsse zu erlangen, und Senden der Messindikatoren der Anschlüsse an die Netzwerkvorrichtung; oder
Messen der den Downlink-Messsignalen entsprechenden Strahlen durch die Endgerätvorrichtung, um Messindikatoren der Strahlen zu erlangen, und Senden der Messindikatoren der Strahlen an die Netzwerkvorrichtung.

8. Verfahren gemäß einem der Ansprüche 1 bis 7, wobei das Uplink-Messsignal ein Uplink-Referenzsignal oder ein Uplink-Verfolgungssignal ist.

9. Verfahren gemäß einem der Ansprüche 1 bis 8, wobei die Downlink-Messsignale Downlink-Referenzsignale, Referenzsignale für Kanalzustandsinformationen oder Messreferenzsignale sind.

10. Netzwerkvorrichtung, umfassend ein oder mehrere Module, die dazu konfiguriert sind, einen der Ansprüche 1, 2, 3, 8 oder 9 umzusetzen.

11. System, umfassend die Netzwerkvorrichtung gemäß Anspruch 10 und eine Endgerätvorrichtung, wobei die Endgerätvorrichtung ein oder mehrere Module umfasst, die dazu konfiguriert sind, das Verfahren gemäß einem der Ansprüche 4 bis 9 umzusetzen.

12. Computerlesbares Speichermedium, umfassend Anweisungen, die, wenn sie von einem Computer ausgeführt werden, den Computer veranlassen, das Verfahren gemäß einem der Ansprüche 1 bis 3 oder das Verfahren gemäß Anspruch 8 oder 9 in Abhängigkeit von einem der Ansprüche 1 bis 3 durchzuführen.

## Revendications

1. Procédé d'envoi d'un signal de mesure, comprenant :
l'envoi (301), par un dispositif de réseau, de signaux de mesure de liaison descendante à un dispositif terminal à l'aide des un ou plusieurs faisceaux de transmission ; et
la réception, par le dispositif de réseau, d'un résultat de détection, renvoyé par le dispositif terminal, d'intensité de signal des signaux de mesure de liaison descendante ;
**caractérisé en ce que** le procédé comprend également :
lors de la détermination, par le dispositif de réseau, du fait que le dispositif terminal entre dans une zone de bord de cellule du dispositif de réseau en détectant que le résultat de détection est inférieur à un seuil spécifié et en déterminant, par le dispositif de réseau, le fait qu'un nombre de dispositifs terminaux qui entrent dans la zone de bord de cellule est inférieur à un nombre de stations de base voisines, l'instruction (303), par le dispositif de réseau, au dispositif terminal d'utiliser une manière de mesure basée sur un signal de mesure de liaison montante.

2. Procédé selon la revendication 1, dans lequel le résultat de détection de l'intensité de signal des signaux de mesure de liaison descendante est une valeur moyenne ou une valeur la plus élevée d'intensité de signal des signaux de mesure de liaison descendante d'une pluralité de faisceaux de transmission.

3. Procédé selon la revendication 1, comprenant également : la réception de signaux de mesure de liaison montante qui sont envoyés par le dispositif terminal à l'aide des un ou plusieurs faisceaux.

4. Procédé de réception d'un signal de mesure, comprenant :
la réception, par un dispositif terminal, de signaux de mesure de liaison descendante qui sont envoyés par un dispositif de réseau à l'aide des un ou plusieurs faisceaux ; et
la détection (302), par le dispositif terminal, d'une intensité de signal des signaux de mesure de liaison descendante et le renvoi d'un résultat de détection au dispositif de réseau ;
**caractérisé en ce que** le procédé comprend également :
lorsque le dispositif de réseau détermine le fait que le dispositif terminal entre dans une zone de bord de cellule du dispositif de réseau en détectant que le résultat de détection, renvoyé par le dispositif terminal, des signaux de mesure de liaison descendante est inférieur à un seuil spécifié et que le dispositif de réseau détermine le fait qu'un nombre de dispositifs terminaux qui entrent dans la zone de bord de cellule est inférieur à un nombre de stations de base voisines, la réception, par le dispositif terminal, d'une notification qui est envoyée par le dispositif de réseau et qui indique d'utiliser une manière de mesure basée sur un signal de mesure de liaison montante.

5. Procédé selon la revendication 4, dans lequel le résultat de détection de l'intensité de signal des signaux de mesure de liaison descendante est une valeur moyenne ou une valeur la plus élevée d'intensité de signal des signaux de mesure de liaison descendante d'une pluralité de faisceaux de transmission.

6. Procédé selon la revendication 4, comprenant également : l'envoi, par le dispositif terminal, de signaux de mesure de liaison montante au dispositif de réseau à l'aide des un ou plusieurs faisceaux.

7. Procédé selon l'une quelconque des revendications 4 à 6, dans lequel la détection, par le dispositif terminal, d'une intensité de signal des signaux de mesure de liaison descendante, et le renvoi d'un résultat de détection au dispositif de réseau comprennent spécifiquement :
la mesure, par le dispositif terminal, de ports correspondant aux signaux de mesure de liaison descendante pour obtenir des indicateurs de mesure de ports, et l'envoi des indicateurs de mesure de ports au dispositif de réseau ; ou
la mesure, par le dispositif terminal, des faisceaux correspondant aux signaux de mesure de liaison descendante pour obtenir des indicateurs de mesure des faisceaux, et l'envoi des indicateurs de mesure des faisceaux au dispositif de réseau.

8. Procédé selon l'une quelconque des revendications 1 à 7, dans lequel le signal de mesure de liaison montante est un signal de référence de liaison montante ou un signal de suivi de liaison montante.

9. Procédé selon l'une quelconque des revendications 1 à 8, dans lequel les signaux de mesure de liaison descendante sont des signaux de référence de liaison descendante, des signaux de référence d'informations d'état de canal ou des signaux de référence de mesure.

10. Dispositif de réseau, comprenant un ou plusieurs modules configurés pour mettre en oeuvre l'une quelconque des revendications 1, 2, 3, 8 ou 9.

11. Système comprenant le dispositif de réseau selon la revendication 10 et un dispositif terminal, dans lequel le dispositif terminal comprend un ou plusieurs modules configurés pour mettre en oeuvre le procédé selon l'une quelconque des revendications 4 à 9.

12. Support de stockage lisible par ordinateur comprenant des instructions qui, lorsqu'elles sont exécutées par un ordinateur, amènent l'ordinateur à réaliser le procédé selon l'une quelconque des revendications 1 à 3 ou le procédé selon la revendication 8 ou 9 dépendant de l'une quelconque des revendications 1 à 3.
